# EUROPÄISCHE PATENTSCHRIFT

(11) **EP 2 422 879 B1**
(45) Veröffentlichungstag und Bekanntmachung des Hinweises auf die Patenterteilung: **13.03.2013**
(21) Anmeldenummer: 11177532.6
(22) Anmeldetag: 15.08.2011
(51) Int. Cl.: B01L 3/00, G01N 35/10, B65D 47/00

(54) **Verschlußvorrichtung für einen Reagenzbehälter**
Closing device for a reagent container
Dispositif de fermeture pour un récipient à réactif

(30) Priorität: 24.08.2010 DE 102010035219
(43) Veröffentlichungstag der Anmeldung: 29.02.2012
(73) Patentinhaber: Siemens Healthcare Diagnostics Products GmbH, 35041 Marburg (DE)
(72) Erfinder: Wilmes, Hugo, 65812 Bad Soden (DE); Bernhard, Joachim, 61184 Karben (DE); Filzinger, Joerg, 65830 Kriftel (DE)

(56) Entgegenhaltungen:
- EP-A1- 1 707 966
- EP-A1- 1 898 220
- EP-A1- 1 918 721
- EP-A1- 2 194 385
- EP-A2- 0 703 457
- EP-A2- 1 046 915
- WO-A1-2007/068094
- US-A- 5 885 529

## Beschreibung

Die Erfindung betrifft eine Verschlussvorrichtung zum Verschluss von Reagenzbehältern.

Auf dem Gebiet der medizinischen Diagnostik kommt eine Vielzahl von Geräten zum Einsatz, die die notwendigen Verfahrensschritte, wie z.B. Pipettieren, Mischen, Inkubieren, Zentrifugieren, Messen etc. vollautomatisch durchführen. Bei den Proben, die mit Hilfe derartiger Geräte analysiert werden, handelt es sich zumeist um menschliche oder tierische Körperflüssigkeiten oder andere Analytenthaltende Flüssigkeiten, die häufig mit mindestens einem Testreagenz versetzt werden müssen. Die Aufbewahrung, die Entnahme, der Transfer und die Zugabe von Flüssigkeiten, die sich in verschiedensten Behältnissen befinden können, sind also wesentliche Vorgänge im Inneren von Diagnostik-Geräten.

Ein zu berücksichtigendes Kriterium bei der Etablierung von Testen auf teil- oder vollautomatischen Diagnostik-Geräten ist die Haltbarkeit der Reagenzien bei Aufbewahrung im Gerät, die sogenannte on-board Stabilität, welche maßgeblich von den Bedingungen im Gerät beeinflusst wird. Besonders problematisch sind der verdunstungsbedingte Massenverlust von Flüssigreagenzien sowie die Kontaminationsgefahr. Zur standardisierten und zuverlässigen Bestimmung von Analyten ist die Verwendung von Reagenzien einer definierten Zusammensetzung unabdingbar, so dass durch Flüssigkeitsverluste verursachte Konzentrationsänderungen die Qualität bzw. die sogenannte Performance des gesamten Tests beeinträchtigen können. Der Grund für die Verdunstung von Flüssigreagenzien ist, dass sie für die automatischen Pipettoren direkt zugänglich sein müssen und daher in der Regel nicht hermetisch verschlossen sind.

Je nach Bauart der Geräte bzw. Pipettoren werden bekanntermaßen unterschiedliche Vorkehrungen zur Verminderung der Verdunstung von Flüssigkeiten aus den Reagenzbehältnissen getroffen. Beispielsweise verfügen viele Diagnostik-Geräte über gekühlte Halterungen bzw. Positionen, in welche die Reagenzbehälter eingesetzt werden. Durch Kühlung der Reagenzien kann der Flüssigkeitsverlust durch Verdunstung wesentlich gesenkt werden. Eine andere Maßnahme zur Verminderung von Verdunstungseffekten ist die Verringerung des Öffnungsquerschnittes des Reagenzbehältnisses, der jedoch nur in begrenztem Umfang angepasst werden kann, limitiert durch die Abmessungen des Pipettors. Ebenfalls üblich ist der Einsatz von mehr oder weniger hermetisch verschließenden Verschlusskappen oder Stopfen.

Einen besonders undurchlässigen Verdunstungsschutz und einen besonders effizienten Schutz vor Kontaminationen bieten Verschlussvorrichtungen, die die Öffnung des Reagenzbehälters möglichst hermetisch abdichten, wie zum Beispiel Dreh- oder Schnappverschlüsse und die so ausgebildet sind, dass sie durch einen entsprechenden Mechanismus im Diagnostik-Gerät automatisch geöffnet und wieder verschlossen werden können. Nachteilig ist jedoch, dass für das automatische Öffnen und Wiederverschließen derartiger Verschlussvorrichtungen äußerst komplizierte Mechanismen und Vorrichtungen auf den Geräten installiert werden müssen.

Eine andere Verschlussvorrichtung, die einen effizienten Verdunstungs- und Kontaminationsschutz sicherstellt, ist in EP-A2-1046915 beschrieben. Darin beschrieben ist ein zweiteiliger Reagenzbehälterverschluss bestehend aus einem Verschlusskörper mit einer Öffnung, der auf die Öffnung des Reagenzbehälters aufgebracht wird. Mit dem Verschlusskörper beweglich verbindbar ist ein Verschlussdeckel, der in der Offenstellung des Verschlusses die Öffnung des Reagenzbehälters freigibt und in der Geschlossenstellung des Verschlusses die Öffnung des Reagenzbehälters verschließt. Das Öffnen und Verschließen der Öffnung des Reagenzbehälters erfolgt dadurch, dass der Verschlussdeckel relativ zum Verschlusskörper in einer horizontalen Ebene bewegt wird. Damit die Verschlussvorrichtung automatisch betätigt werden kann, weist der Verschlussdeckel einen sogenannten Mitnehmer auf, an dem der Stößel einer entsprechenden Vorrichtung des Gerätes, in welchem sich der Reagenzbehälter befindet, angreifen kann. Durch eine horizontale Bewegung des Stößels oder des Reagenzbehälters wird die horizontale Bewegung des Verschlussdeckels bewirkt und damit der Reagenzbehälter geöffnet bzw. verschlossen.

Mit der Aufbewahrung von lichtempfindlichen Reagenzien in Diagnostik-Geräten ist eine zusätzliche Herausforderung verbunden. Moderne Testverfahren basieren zunehmend auf hochsensitiven photochemischen Methoden. Die dabei verwendeten Reagenzien enthalten lichtempfindliche Komponenten, wie Photosensibilisatoren oder chemilumineszierende oder fluoreszierende Substanzen, die durch die Einwirkung von Licht angeregt werden. Um die on-board Stabilität lichtempfindlicher Reagenzien zu gewährleisten, muss jegliche Lichteinwirkung möglichst vermieden werden. Dazu werden derartige Reagenzien üblicherweise in Behälter abgefüllt, die aus einem lichtdichten Material bestehen, vorzugsweise aus einem gefärbten Kunststoff. Zum Transport und zur Lagerung der Reagenzien bis sie im Diagnostik-Gerät platziert werden, sind die Reagenzbehälter hermetisch versiegelt. Üblicherweise wird die Reagenzbehälteröffnung dazu vom Hersteller mit einer lichtdichten Folie verschweißt.

Nachteilig ist bei derartigen Folienversiegelungen, die im übrigen auch zum Transport und zur Lagerung von nichtlichtempfindlichen Reagenzien verwendet werden, dass die Folie vom Anwender manuell vom Reagenzbehälter entfernt werden muss, bevor eine geeignete automatisch wiederverschließbare Verschlussvorrichtung angebracht werden kann, mit der der Reagenzbehälter dann in dem Diagnostik-Gerät platziert wird. Das manuelle Entfernen der Folie und das damit verbundene Hantieren am geöffneten Reagenzbehälter ist mit der Gefahr verbunden, dass Reagenz verschüttet wird oder dass Verunreinigungen in den Behälter gelangen. Da der Anwender also besonders vorsichtig vorgehen muss, um die genannten Risiken zu vermeiden, ist das Entfernen von Folienversiegelungen und das anschließende Aufbringen der Verschlussvorrichtungen auch ein zeit- und damit kostenaufwändiger Arbeitsschritt. Besonders nachteilig bei der Folienentfernung von Reagenzbehältern, die lichtempfindliche Reagenzien enthalten, und bei der anschließenden Aufbringung der Verschlussvorrichtung ist, dass diese Schritte möglichst unter Lichtabschluss erfolgen sollten, d.h. in einer Dunkelkammer. Das blinde Hantieren des Anwenders steigert jedoch die genannten Risiken des Verschüttens und der Verunreinigung.

Aus EP-A1-1918721 und EP-A1-2194385 sind Verschlussvorrichtungen für versiegelte Reagenzbehälter bekannt, die auf der dem Reagenzbehälter zugewandten Seite Perforationsmittel zum Durchstoßen einer Aluminiumfolie aufweisen.

Der vorliegenden Erfindung liegt daher die Aufgabe zugrunde eine wiederverschließbare Verschlussvorrichtung für einen folienversiegelten Reagenzbehälter bereit zu stellen, die einen möglichst effizienten Schutz vor Verdunstung und Kontamination bietet und die es außerdem ermöglicht, dass auf eine manuelle Entfernung einer etwaigen Folienversiegelung verzichtet werden kann.

Diese Aufgabe wird dadurch gelöst, dass eine Verschlussvorrichtung bereit gestellt wird, welche aus einem ersten und einem zweiten Verschlusselement besteht, wobei das erste Verschlusselement, welches eine Öffnung aufweist, auf der Öffnung des zu verschließenden Behälters angebracht wird und wobei das zweite Verschlusselement mit dem ersten Verschlusselement beweglich verbindbar ist, wobei das erste Verschlusselement der Vorrichtung auf der dem Behälter zugewandten Unterseite einen die Öffnung umlaufenden, erhabenen Rand aufweist, der einen scharfkantigen und einen stumpfen Bereich aufweist und wobei die Verschlussvorrichtung ferner die Merkmale des kennzeichnenden Teils des Anspruchs 1 aufweist.

Dies hat den Vorteil, dass mit dem Anbringen der Verschlussvorrichtung auf einen Reagenzbehälter eine etwaige Folienversiegelung der Reagenzbehälteröffnung durchstoßenwird. Dadurch dass der umlaufende Rand auf der Unterseite des ersten Verschlusselements neben dem scharfkantigen Bereich zum Perforieren, Schneiden bzw. Durchstoßen einer Folie auch einen stumpfen, also nicht-scharfkantigen Bereich aufweist, wird sichergestellt, dass der Ausschnitt nicht komplett von der übrigen Folie abgetrennt wird, sondern nur in den Behälter hinein ragt und mit der Folie verbunden bleibt. Dies verhindert, dass der Folienausschnitt in das Gefäß fallen kann.

Die erfindungsgemäße Verschlussvorrichtung eignet sich zum Verschließen eines Behälters, der mindestens eine Öffnung aufweist.

Ein Gegenstand der vorliegenden Erfindung ist daher eine Vorrichtung zum lichtdichten Verschluss eines Behälters mit einer Öffnung, besagte Vorrichtung aufweisend
a) ein erstes Verschlusselement mit einer dem Behälter zugewandten Unterseite und einer dem Behälter abgewandten Oberseite und mit mindestens einer Öffnung, das so ausgeformt ist, dass es formschlüssig so am Behälter anbringbar ist, dass sich die Öffnung des Verschlusselements über der Öffnung des Behälters befindet, und
b) ein zweites Verschlusselement mit einer dem ersten Verschlusselement zugewandten Unterseite und einer dem ersten Verschlusselement abgewandten Oberseite, das mit dem ersten Verschlusselement beweglich verbindbar ist und das in einer Geschlossenstellung die mindestens eine Öffnung des ersten Verschlusselements bedeckt und in einer Offenstellung die mindestens eine Öffnung des ersten Verschlusselements nicht bedeckt,
und wobei auf der Unterseite des ersten Verschlusselements ein die mindestens eine Öffnung umlaufender, erhabener Rand vorgesehen ist, der einen ersten Längenabschnitt mit einer scharfkantigen Oberfläche und einen zweiten Längenabschnitt mit einer stumpfen Oberfläche aufweist. Der erste Längenabschnitt des erhabenen Randes, der eine scharfkantige Oberfläche aufweist, weist einen ersten, einen zweiten und einen dritten Teilabschnitt auf, wobei der erste und der Teilabschnitt jeweils geradlinig verlaufen und wobei der zweite Teilabschnitt, der den ersten und den dritten Teilabschnitt verbindet, bogenförmig verläuft und wobei auf der Oberfläche des ersten und/oder der dritten Teilabschnitts eine Schneide über die Gesamtlänge des Teilabschnitts verläuft und wobei der zweite Teilabschnitt zackenförmige Strukturen aufweist.

Der zweite Längenabschnitt des erhabenen Randes, welcher eine stumpfe Oberfläche aufweist, verläuft auf der Außenseite, d.h. auf der der Öffnung abgewandten Seite bogenförmig. Dies bewirkt, dass der Folienausschnitt dort, wo er mit der Folie verbunden bleibt, bogenförmig (konkav) verformt wird. Durch diese Art der Verformung wird der in den Behälter ragende Folienausschnitt stabilisiert bzw. versteift, wodurch ein Flattern des Folienausschnitts, welches den Zugriff durch das Verschlusselement und die Behälteröffnung behindern könnte, vermieden wird.

Die stumpfe Oberfläche des zweiten Längenabschnitts ist bevorzugterweise einfach eine glatte Oberfläche. Sie kann planparallel zur Unterseite des ersten Verschlusselements verlaufen. Alternativ kann die Oberfläche in einer Ebene liegen, die relativ zur Unterseite des ersten Verschlusselements geneigt ist.

Die scharfkantige Oberfläche des ersten Längenabschnitts des die Öffnung des ersten Verschlusselements umlaufenden, erhabenen Randes weist zackenförmige und/oder schneidenförmige Strukturen auf. Die Art der Struktur bzw. die Art der Anordnung verschiedener Strukturen (Schneidengeometrie) zur Schaffung einer scharfkantigen Oberfläche auf dem ersten Längenabschnitt des erhabenen Randes kann je nach Beschaffenheit des zu durchdringenden Materials, mit welchem die Behälteröffnung versiegelt ist, optimiert werden, um ein möglichst leichtes Durchdringen zu gewährleisten.

Vorzugsweise überragt der erste Längenabschnitt des erhabenen Randes, der eine scharfkantige Oberfläche aufweist, den zweiten Längenabschnitt des erhabenen Randes, der eine stumpfe Oberfläche aufweist, in Bezug auf dessen Höhe zumindest teilweise. Dies hat den Vorteil, dass beim Anbringen des ersten Verschlusselements auf einen folienversiegelten Behälter zunächst der Längenabschnitt mit der scharfkantigen Oberfläche mit der zu durchdringenden Folie in Berührung kommt und die gesamte ausgeübte Kraft auf den scharfkantigen Bereich des umlaufenden Randes ausgeübt wird. Dies ermöglicht ein leichtes Durchdringen des zu durchdringenden Materials mit geringem Kraftaufwand. Das Durchdringen mit geringem Kraftaufwand kann zusätzlich dadurch erleichtert werden, dass der erste Längenabschnitt des erhabenen Randes, der eine scharfkantige Oberfläche aufweist, von der Unterseite des ersten Verschlusselements aus schräg bzw. rampenförmig ansteigt, also in einer Ebene liegt, die relativ zur Unterseite des ersten Verschlusselements geneigt ist. Der Neigungswinkel der Ebene beträgt vorzugsweise etwa 1 bis etwa 45°.

Der erste Längenabschnitt des die Öffnung des ersten Verschlusselements umlaufenden, erhabenen Randes, der eine scharfkantige Oberfläche aufweist, weist einen ersten, einen zweiten und einen dritten Teilabschnitt auf, wobei der erste und der dritte Teilabschnitt jeweils geradlinig verlaufen und wobei der zweite Teilabschnitt, welcher den ersten und den dritten Teilabschnitt miteinander verbindet, bogenförmig verläuft. Der erste und dritte Teilabschnitt können parallel zueinander verlaufen oder leicht schräg zueinander verlaufen, so dass sie -würde man sie verlängern- außerhalb des umlaufenden erhabenen Randes einen Schnittpunkt hätten. Der erste und/oder der dritte Teilabschnitt weist jeweils eine Schneide auf, die über die gesamte Länge des jeweiligen Teilabschnitts verläuft. Der zweite Teilabschnitt, der den ersten und dritten Teilabschnitt miteinander verbindet, weist zackenförmige Strukturen auf. Insbesondere in Verbindung mit einem rampenförmigen Verlauf des ersten Längenabschnitts des erhabenen Randes mit der Maximalhöhe im Scheitelpunkt des bogenförmigen zweiten Teilabschnitts gewährleistet diese Ausführungsform, dass das zu durchdringende Material, mit welchem die Behälteröffnung versiegelt ist, zunächst mit Hilfe der zackenförmigen Strukturen des zweiten Teilabschnitts an einer Stelle perforiert wird und bei anhaltendem Druck von der perforierten Stelle ausgehend mit Hilfe der Schneiden des ersten und dritten Teilabschnitts sauber durchschnitten wird. Dies gewährleistet neben dem kontrollierten Durchdringen des zu durchdringenden Materials mit geringem Kraftaufwand, dass der Folienausschnitt saubere Schnittkanten aufweist, wodurch ein Ausfransen der Schnittränder vermieden wird. Ausgefranste Schnittränder könnten in die Behälteröffnung hineinragen und so den Zugriff z.B. von Pipettoren behindern.

Die bewegliche Verbindung zwischen dem ersten und zweiten Verschlusselement kann beispielsweise durch eine lösbare Steckverbindung hergestellt werden. Dazu weisen die beiden Verschlusselemente ineinandergreifende Strukturen auf wie z.B. einen Stift und eine entsprechende Bohrung. Die bewegliche Verbindung bildet einen Drehpunkt. Der Drehpunkt ist so angeordnet, dass das zweite Verschlusselement gegenüber dem ersten Verschlusselement in einer horizontalen Ebene beweglich ist. Der Bewegungsradius ist so zu wählen, dass eine Offenstellung, in der alle im ersten Verschlusselement vorhandenen Öffnungen zugänglich sind, und eine Geschlossenstellung, in der alle im ersten Verschlusselement vorhandenen Öffnungen verschlossen sind, erzielt werden kann.

Eine weitere Ausführungsform der erfindungsgemäßen Verschlussvorrichtung ist so beschaffen, dass sie sich zum lichtdichten Verschluss eines mehrkammrigen Behälters eignet.

Testkits, die verschiedene Reagenzien zur Durchführung eines diagnostischen Verfahrens enthalten, können beispielweise in Form eines mehrkammrigen Reagenzbehälters, in dem die verschiedenen Reagenzien getrennt aufbewahrt werden, bereit gestellt werden.

Der Begriff "mehrkammriger Behälter" umfasst einen Behälter bestehend aus mindestens zwei Kammern zur Aufnahme und Aufbewahrung von Flüssigkeiten. Der Behälter kann einstückig ausgebildet sein oder mehrere separate Kammern aufweisen, die miteinander verbunden sind. Ein mehrkammriger Behälter kann drei, vier, fünf oder mehr Kammern umfassen.

Zum lichtdichten Verschließen eines mehrkammrigen Behälters mit mindestens zwei Öffnungen weist die Verschlussvorrichtung, welche aus einem ersten und einem zweiten Verschlusselement besteht, in dem ersten Verschlusselement, welches auf dem zu verschließenden Behälters angebracht wird, mindestens zwei Öffnungen auf, die sich, wenn das Verschlusselement auf dem Behälter angebracht ist, über den Öffnungen des Behälters befinden. Auf der dem Behälter zugewandten Unterseite des ersten Verschlusselements ist für jede Öffnung ein die Öffnung umlaufender, erhabener Rand vorgesehen, der einen scharfkantigen und einen stumpfen Bereich aufweist. Ferner weist die Verschlussvorrichtung die Merkmale des kennzeichnenden Teils des Anspruchs 6 auf.

Ein weiterer Gegenstand der vorliegenden Erfindung ist daher eine Vorrichtung zum lichtdichten Verschluss eines mehrkammrigen Behälters mit mindestens zwei Öffnungen, besagte Vorrichtung aufweisend
a) ein erstes Verschlusselement mit einer dem Behälter zugewandten Unterseite und einer dem Behälter abgewandten Oberseite und mit mindestens zwei Öffnungen, das so ausgeformt ist, dass es formschlüssig so am Behälter anbringbar ist, dass sich die Öffnungen des Verschlusselements über den Öffnungen des Behälters befinden, und
b) ein zweites Verschlusselement mit einer dem ersten Verschlusselement zugewandten Unterseite und einer dem ersten Verschlusselement abgewandten Oberseite, das mit dem ersten Verschlusselement beweglich verbindbar ist und das in einer Geschlossenstellung die Öffnungen des ersten Verschlusselements bedeckt und in einer Offenstellung die Öffnungen des ersten Verschlusselements nicht bedeckt,
wobei auf der Unterseite des ersten Verschlusselements für jede Öffnung jeweils ein die Öffnung umlaufender, erhabener Rand vorgesehen ist, der einen ersten Längenabschnitt mit einer scharfkantigen Oberfläche und einen zweiten Längenabschnitt mit einer stumpfen Oberfläche aufweist. Der erste Längenabschnitt eines jeden erhabenen Randes weist einen ersten, einen zweiten und einen dritten Teilabschnitt auf, wobei der erste und der dritte Teilabschnitt jeweils geradlinig verlaufen und wobei der zweite Teilabschnitt, der den ersten und den dritten Teilabschnitt verbindet, bogenförmig verläuft und wobei auf der Oberfläche des ersten und/oder dritten Teilabschnitts eine Schneide über die Gesamtlänge des Teilabschnitts verläuft und wobei der zweite Teilabschnitt zackenförmige Strukturen aufweist.

Das zweite Verschlusselement, das eine dem ersten Verschlusselement zugewandte Unterseite und eine dem ersten Verschlusselement abgewandte Oberseite aufweist und das mit dem ersten Verschlusselement beweglich verbindbar ist, dient dem Öffnen und Verschließen der einen Öffnung oder der mehreren Öffnungen in dem ersten Verschlusselement und damit dem Öffnen und Verschließen der Öffnung des Behälters oder der mehreren Öffnungen eines mehrkammrigen Behälters. Dazu ist das zweite Verschlusselement zwischen einer Offenstellung und einer Geschlossenstellung beweglich. Dies bewirkt einen optimalen Schutz des Behälterinnern vor Verdunstung und Lichteinfall im Geschlossenzustand sowie den ungehinderten Zugriff auf die Kammer(n) im Offenzustand, z.B. für einen Pipettor.

Bevorzugterweise weist das zweite Verschlusselement auf der Oberseite einen Mitnehmer auf, auf den eine Horizontalkraft einwirken kann, wodurch das zweite Verschlusselement von der Geschlossenstellung in die Offenstellung und umgekehrt beweglich ist. Dies hat den Vorteil, dass die Verschlussvorrichtung lediglich mit Hilfe eines geeigneten senkrecht angeordneten stabförmigen Objekts, das eine Horizontalkraft auf den Mitnehmer ausüben kann, geöffnet und wiederverschlossen werden kann. Die Horizontalkraft kann entweder durch eine Bewegung des stabförmigen Objekts relativ zum Behälter oder durch eine Bewegung des Behälters relativ zum stabförmigen Objekt erzeugt werden. Diese Ausführungsform der Verschlussvorrichtung eignet sich besonders zur Verwendung in einem automatischen Diagnostik-Gerät.

Das erste Verschlusselement weist auf der dem Behälter abgewandten Oberseite bevorzugterweise Führungsbrücken zur Führung des zweiten Verschlusselements, welches beweglich ist, auf. Dies bewirkt, dass die Bewegungsrichtung bzw. der Bewegungsradius des zweiten Verschlusselements festgelegt ist. Das zweite Verschlusselement weist vorzugsweise entsprechende Flügelkanten auf, die so mit den Führungsbrücken des ersten Verschlusselements zusammenwirken, dass in der Geschlossenstellung und in der Offenstellung ein erhöhter Preßdruck auf das zweite Verschlusselement wirkt. Dies bewirkt eine Stabilisierung der Geschlossenstellung und der Offenstellung des zweiten Verschlusselements, wodurch unerwünschte Zwischenstellungen vermieden werden, in die das zweite Verschlusselement aufgrund von Vibrationen oder anderen mechanischen Einflüssen, die insbesondere in automatischen Diagnostik-Geräten auftreten können, bewegt werden könnte.

Bevorzugterweise ist auf der Unterseite des zweiten Verschlusselements für jede Öffnung des ersten Verschlusselements jeweils eine Dichtlippe, also ein umlaufender, gerinfügig erhabener Rand, vorgesehen, die jeweils so ausgestaltet sind, dass sie in der Geschlossenstellung die Öffnungen jeweils dichtend umlaufen. Dies bewirkt eine Verbesserung des Verdunstungsschutzes und eine Erhöhung der Lichtdichtheit der Verschlussvorrichtung in der Geschlossenstellung.

Auf der Oberseite des ersten Verschlusselements ist bevorzugterweise für mindestens eine Dichtlippe, die auf der Unterseite des zweiten Verschlusselements vorhanden ist, eine Erhebung vorgesehen, die so angeordnet ist, dass sie in der Offenstellung des Verschlusselements von der Dichtlippe passgenau umlaufen wird. Es ist auch möglich eine Erhebung für jede vorhandene Dichtlippe vorzusehen. Dies bewirkt alternativ oder zusätzlich zu der oben beschriebenen Stabilisierung mittels Führungsbrücken und Flügelkanten eine Stabilisierung der Offenstellung des zweiten Verschlusselements, wodurch unerwünschte Zwischenstellungen vermieden werden, in die das zweite Verschlusselement aufgrund von Vibrationen oder anderen mechanischen Einflüssen bewegt werden könnte.

Eine besonders bevorzugte Ausführungsform einer erfindungsgemäßen Verschlussvorrichtung betrifft eine Vorrichtung zum lichtdichten Verschluss eines dreikammrigen Behälters mit drei Öffnungen (A, B, C), die linear angeordnet sind. In dieser Ausführungsform weist das erste Verschlusselement drei Öffnungen (A', B', C') auf, die ebenfalls linear angeordnet sind. Ferner weist das zweite Verschlusselement eine Öffnung D auf, die sich in der Geschlossenstellung zwischen den Öffnungen A' und B' befindet und die sich in der Offenstellung über der Öffnung B' des ersten Verschlusselements befindet. Diese Ausführungsform hat den Vorteil, dass durch die optimale räumliche Anordnung der verschiedenen Elemente die Größe der Verschlussvorrichtung verhältnismäßig gering gehalten werden kann. Ein geringer Raumbedarf ist insbesondere für Verschlussvorrichtungen zur Verwendung in automatischen Diagnostik-Geräten wünschenswert, da der Platz in derartigen Geräten grundsätzlich sehr beschränkt ist.

Das zweite Verschlusselement in der Ausführung, wie es für den Verschluss eines Behälters mit drei Öffnungen beschrieben ist, kann ferner unabhängig von dem ersten Verschlusselement verwendet werden. Das zweite Verschlusselement kann zusammen mit einem ersten Verschlusselement verwendet werden, wobei letzteres auf der Unterseite einen umlaufenden Rand mit einem scharfkantigen Bereich zum Perforieren, Schneiden bzw. Durchstoßen einer Folie aufweisen kann oder nicht. Das zweite Verschlusselement kann aber auch ohne ein separates erstes Verschlusselement verwendet werden, sofern die Oberseite des Behälters, die die Behälteröffnungen (A, B, C) aufweist, so ausgestaltet ist, dass das zweite Verschlusselement beweglich anbringbar ist.

Bevorzugt ist ein Verschlusselement zum lichtdichten Verschluss eines Behälters mit drei Öffnungen A, B, C, die linear angeordnet sind. Das Verschlusselement weist eine dem Behälter zugewandte Unterseite und eine dem Behälter abgewandte Oberseite auf, und ist mit dem Behälter beweglich verbindbar. In einer Geschlossenstellung bedeckt das Verschlusselement die Öffnungen (A, B, C) des Behälters, in einer Offenstellung bedeckt es die Behälteröffnungen (A, B, C) nicht. Das Verschlusselement selbst weist eine Öffnung D auf, die sich in der Geschlossenstellung zwischen den Öffnungen A und B des Behälters befindet und die sich in der Offenstellung über der Öffnung B des Behälters befindet.

Eine erfindungsgemäße Verschlussvorrichtung besteht vorzugsweise aus Kunststoff, wie z.B. Polypropylen, besonders bevorzugt aus farbigem, lichtundurchlässigem Kunststoff. Die Verschlusselemente der erfindungsgemäßen Vorrichtung können z.B. durch konventionelle Spritzgußtechniken hergestellt werden.

Die Abmessungen einer erfindungsgemäßen Vorrichtung sind den Abmessungen des zu verschließenden Behälters anzupassen.

Bevorzugterweise wird eine erfindungsgemäße Vorrichtung dadurch an einem Behälter angebracht, dass das erste Verschlusselement formschlüssig mit dem Behälter verbunden wird. Dazu kann das erste Verschlusselement eine die Unterseite umlaufende Außenwand aufweisen, die entsprechend dem zu verschließenden Behälter ausgestaltet ist, so dass durch Druck eine Steckverbindung mit relativ hoher Haltekraft herstellbar ist. Auf diese Art kann eine erfindungsgemäße Vorrichtung von einem Anwender manuell durch einfaches Zusammenstecken/Aufsetzen an einem Behälter angebracht werden. Die Höhe der die Unterseite des ersten Verschlusselements umlaufenden Außenwand ist bevorzugterweise so gewählt, dass sie die Höhe des oder der die Öffnung(en) umlaufenden, erhabenen Randes/Ränder überragt. Dies hat den Vorteil, dass beim Anbringen des ersten Verschlusselements bzw. der Verschlussvorrichtung am Behälter ein etwaiger Folienverschluss erst geöffnet wird, wenn die Außenwand den oberen Behälterrand vollständig umschließt, wodurch ein Maximum an Lichtdichtheit erzielt wird.

Das zweite Verschlusselement ist entweder zum Zeitpunkt des Anbringens des ersten Verschlusselements am Behälter bereits mit dem ersten Verschlusselement bereits verbunden, oder es wird unmittelbar nach dem Anbringen des ersten Verschlusselements mit diesem verbunden.

Die vorliegende Erfindung betrifft ferner ein Testkit für einen diagnostischen Test, welches einen ein- oder mehrkammrigen Reagenzbehälter umfasst, der ein oder mehrere Reagenzien in flüssiger oder lyophilisierter Form enthält und dessen Öffnung(en) mit einer Folie hermetisch verschlossen ist/sind. Das erfindungsgemäße Testkit umfasst ferner eine erfindungsgemäße Verschlussvorrichtung, die vom Anwender vor der Verwendung des Reagenzes bzw. der Reagenzien an dem Reagenzbehälter angebracht wird.

### FIGURENBESCHREIBUNG

Die in den Figuren dargestellten Ausführungsformen sollen die vorliegende Erfindung veranschaulichen und sind nicht als Einschränkung zu verstehen.

### FIGUR 1

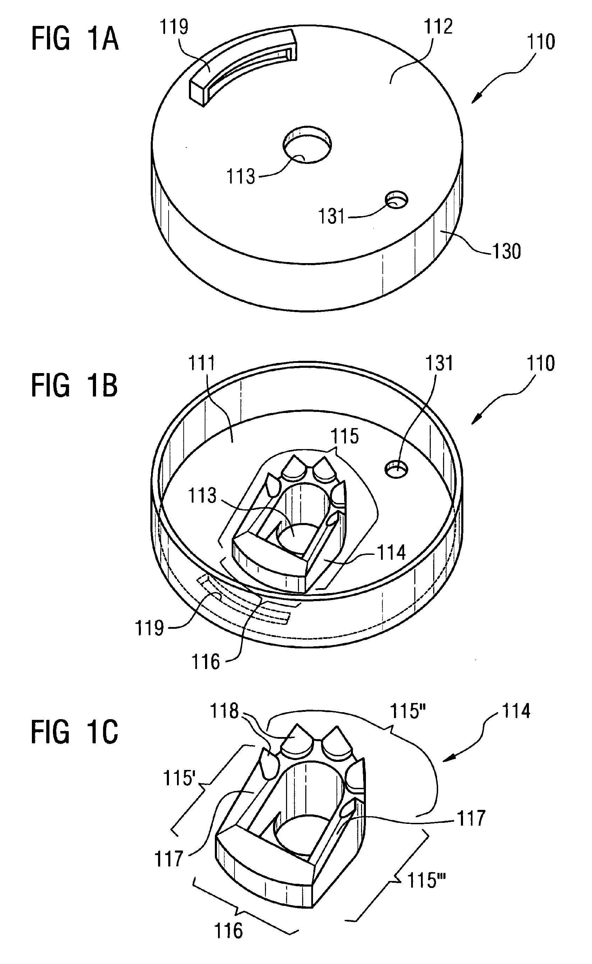

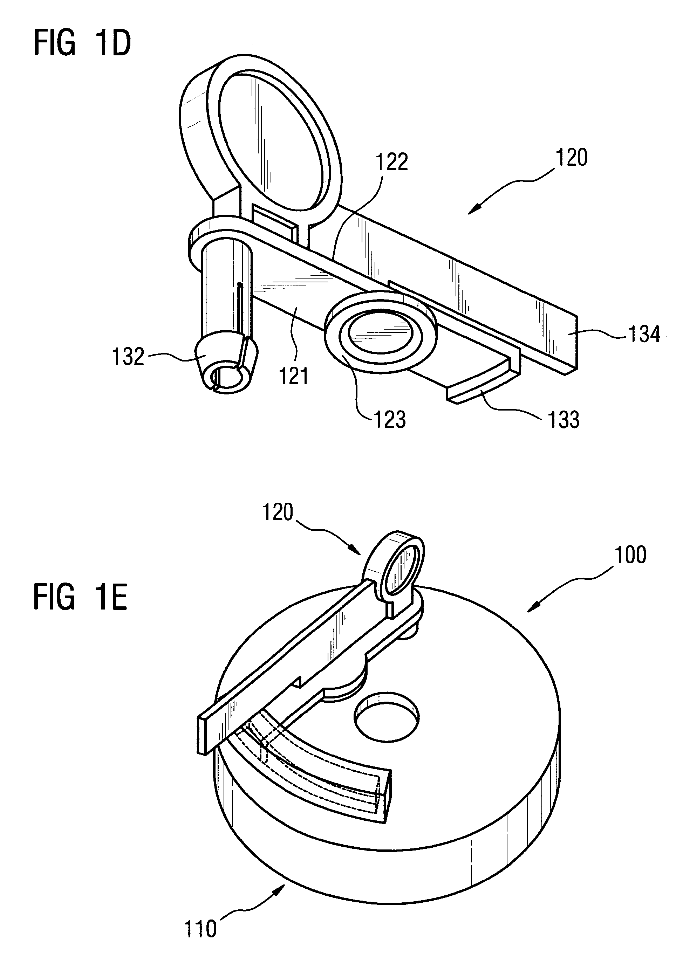

Fig. 1 zeigt schematische Darstellungen einer Ausführungsform der erfindungsgemäßen Vorrichtung 100 zum lichtdichten Verschluss eines Behälters mit einer Öffnung.

Fig. 1A zeigt das erste Verschlusselement 110 der Vorrichtung 100 in einer Sicht von oben auf die dem Behälter abgewandte Oberseite 112. In diesem Beispiel weist das erste Verschlusselement 110 eine Öffnung 113 sowie eine Führungsbrücke 119 zur Führung des zweiten Verschlusselements 120 auf. Das erste Verschlusselement 110 weist ferner eine die Unterseite umlaufende Außenwand 130 auf, die entsprechend dem zu verschließenden Behälter hier kreisförmig ausgestaltet ist, so dass durch Druck eine Steckverbindung mit relativ hoher Haltekraft herstellbar ist. Ferner weist das erste Verschlusselement 110 ein Steckloch 131 auf, welches der Aufnahme eines Stiftes 132 (siehe Fig. 1D) dient, der am zweiten Verschlusselement 120 angebracht ist. Mit Hilfe der Steckverbindung sind das erste Verschlusselement 110 und das zweite Verschlusselement 120 beweglich verbindbar.

Fig. 1B zeigt das erste Verschlusselement 110 der Vorrichtung 100 in einer Sicht von unten auf die dem Behälter zugewandte Unterseite 111. Auf der Unterseite 111 befindet sich ein die Öffnung 113 umlaufender, erhabener Rand 114. Der umlaufende, erhabene Rand 114 besteht aus einem ersten Längenabschnitt 115 mit einer scharfkantigen Oberfläche und einem zweiten Längenabschnitt 116 mit einer stumpfen Oberfläche. Die der Öffnung 113 abgewandte Außenseite des zweiten Längenabschnitts 116 des erhabenen Randes 114 verläuft bogenförmig, um den Folienausschnitt, der in diesem Bereich mit der Folie verbunden bleibt, bogenförmig zu verformen. Durch diese Art der Verformung wird der in den Behälter ragende Folienausschnitt stabilisiert bzw. versteift, wodurch ein Flattern des Folienausschnitts, welches den Zugriff durch das Verschlusselement und die Behälteröffnung behindern könnte, vermieden wird.

Fig. 1C zeigt eine Vergrößerung des umlaufenden, erhabenen Randes 114. In diesem Beispiel weist der erste Längenabschnitt 115 des umlaufenden, erhabenen Randes 114 sowohl zackenförmige als auch schneidenförmige Strukturen 118, 117 auf. Der erste Längenabschnitt 115 des umlaufenden, erhabenen Randes 114, der eine scharfkantige Oberfläche aufweist, weist hier einen ersten, einen zweiten und einen dritten Teilabschnitt 115', 115" und 115"' auf, wobei der erste und der dritte Teilabschnitt 115', 115"' jeweils geradlinig verlaufen und wobei der zweite Teilabschnitt 115" , welcher den ersten und den dritten Teilabschnitt miteinander verbindet, bogenförmig verläuft. Der erste und dritte Teilabschnitt verlaufen parallel zueinander. Der erste und der dritte Teilabschnitt 115', 115"' weisen jeweils eine Schneide 117 auf, die über die gesamte Länge des jeweiligen Teilabschnitts verläuft. Der zweite Teilabschnitt 115" , der den ersten und dritten Teilabschnitt miteinander verbindet, weist zackenförmige Strukturen 118 auf.

Der erste Längenabschnitt 115 des erhabenen Randes 114, der eine scharfkantige Oberfläche aufweist, überragt hier den zweiten Längenabschnitt 116 des erhabenen Randes, der eine stumpfe Oberfläche aufweist, in Bezug auf dessen Höhe. Die beiden Teilabschnitte 115' und 115"' steigen rampenförmig an, liegen also in einer Ebene, die relativ zur Unterseite des ersten Verschlusselements 110 geneigt ist. Der höchste Punkt liegt im Scheitelpunkt des bogenförmigen Teilabschnitts 115" , der die Teilabschnitte 115' und 115"' verbindet. Diese Ausgestaltung hat den Vorteil, dass beim Anbringen des ersten Verschlusselements 110 auf einen folienversiegelten Behälter zunächst der Längenabschnitt mit der zackenförmigen scharfkantigen Oberfläche mit der zu durchdringenden Folie in Berührung kommt und gesamte ausgeübte Kraft auf den zackenförmigen Bereich des umlaufenden Randes 114 ausgeübt wird. Dies ermöglicht ein leichtes Perforieren des zu durchdringenden Materials mit geringem Kraftaufwand. Mit dem Ausüben weiterer Druckkraft zerteilen die Schneiden der Teilabschnitte 115' und 115"' das Folienmaterial, wobei eine saubere Schnittkante erzeugt wird.

Fig. 1D zeigt das zweite Verschlusselement 120 der Vorrichtung 100 in einer Sicht von schräg unten auf die dem ersten Verschlusselement zugewandte Unterseite 121. Das zweite Verschlusselement 120 weist einen Stift 132 auf, welcher zur Herstellung der beweglichen Verbindung mit dem ersten Verschlusselement 110 dient. Auf der Unterseite 121 des zweiten Verschlusselements 120 ist für die Öffnung 113 des ersten Verschlusselements 110 (siehe Fig. 1A) eine Dichtlippe 123, also ein umlaufender, geringfügig erhabener Rand, vorgesehen, die so ausgestaltet ist, dass sie in der Geschlossenstellung die Öffnung 113 (soehe Fig. 1A) dichtend umläuft. Dies bewirkt eine Verbesserung des Verdunstungsschutzes und eine Erhöhung der Lichtdichtheit der Verschlussvorrichtung in der Geschlossenstellung. Das hier gezeigte zweite Verschlusselement 120 weist ferner an dem beweglichen Ende eine Flügelkante 133 auf, die in die Führungsbrücke 119 des ersten Verschlusselements 110 (siehe Fig. 1A) greifen kann, wodurch der Bewegungsradius des zweiten Verschlusselements 120 festgelegt wird. Weiterhin weist das hier gezeigte zweite Verschlusselement 120 auf der Oberseite 122 einen Mitnehmer 134 auf, auf den eine Horizontalkraft einwirken kann, wodurch das zweite Verschlusselement 120 von der Geschlossenstellung in die Offenstellung und umgekehrt beweglich ist.

Fig. 1E zeigt eine Vorrichtung 100 bestehend aus einem ersten Verschlusselement 110 und einem zweiten Verschlusselement 120 in der Offenstellung. In dieser Stellung ist der Zugriff auf das Behälterinnere möglich.

### FIGUR 2

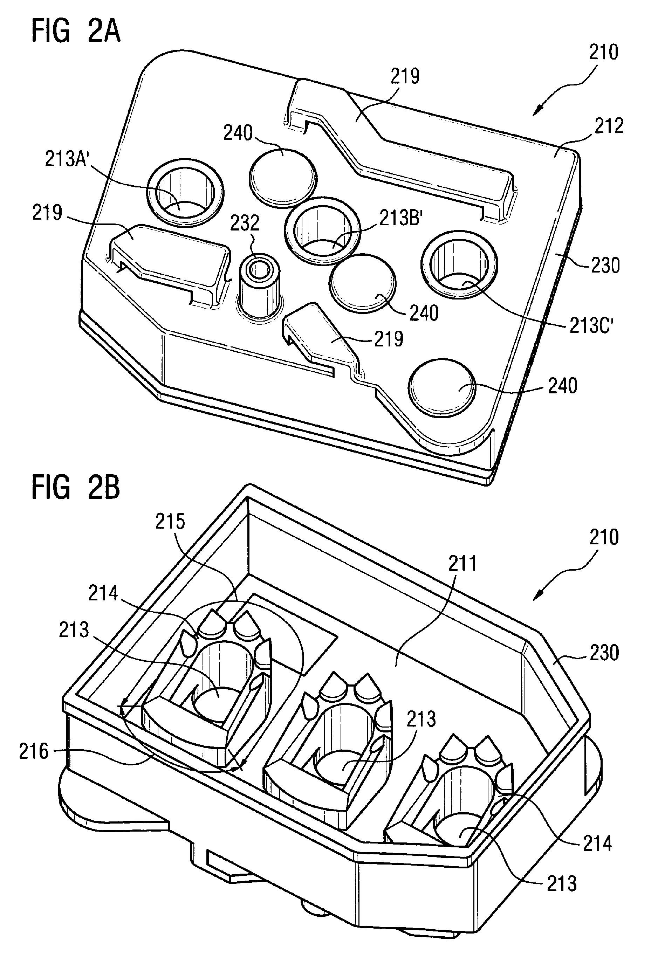

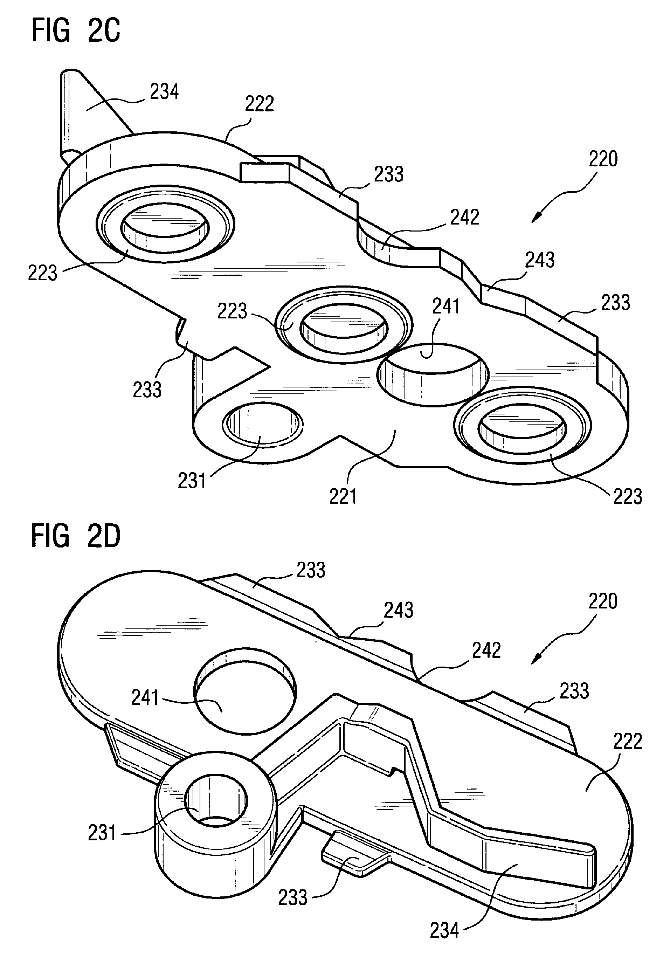

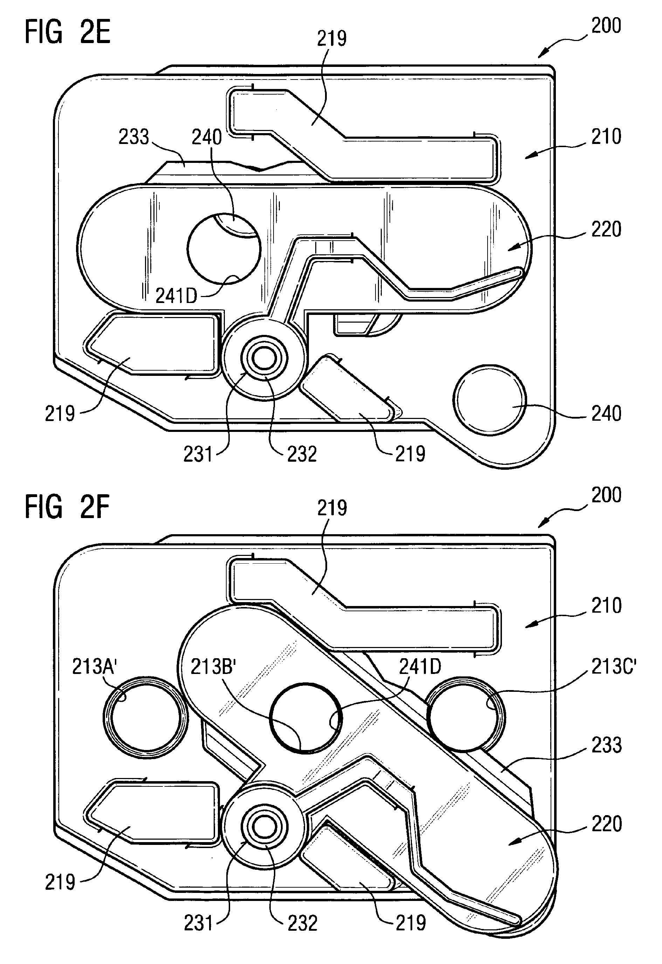

Fig. 2 zeigt schematische Darstellungen einer Ausführungsform der erfindungsgemäßen Vorrichtung 200 zum lichtdichten Verschluss eines dreikammrigen Behälters mit drei Öffnungen.

Fig. 2A zeigt das erste Verschlusselement 210 der Vorrichtung 200 in einer Sicht von oben auf die dem Behälter abgewandte Oberseite 212. In diesem Beispiel weist das erste Verschlusselement 210 drei Öffnungen 213 (A', B', C') sowie Führungsbrücken 219 zur Führung des zweiten Verschlusselements 220 auf. Das erste Verschlusselement 210 weist ferner eine die Unterseite umlaufende Außenwand 230 auf, die entsprechend dem zu verschließenden Behälter hier rechteckig ausgestaltet ist, so dass durch Druck eine Steckverbindung mit relativ hoher Haltekraft herstellbar ist. Ferner weist das erste Verschlusselement 210 einen Stift 232 auf zur Herstellung der beweglichen Verbindung mit dem zweiten Verschlusselement 220, welches eine Bohrung zur Aufnahme des Stiftes aufweist (siehe Fig. 2C). Mit Hilfe der Steckverbindung sind das erste Verschlusselement 210 und das zweite Verschlusselement 220 beweglich verbindbar. Weiterhin weist das hier abgebildete Verschlusselement 210 drei Erhebungen 240 auf, die so angeordnet sind, dass sie in der Offenstellung des Verschlusselements 220 von den Dichtlippen 223 auf der Unterseite des zweiten Verschlusselements 220 (siehe Fig. 2C) jeweils passgenau umlaufen werden. Dies bewirkt eine Stabilisierung der Offenstellung des zweiten Verschlusselements 220, wodurch unerwünschte Zwischenstellungen vermieden werden, in die das zweite Verschlusselement 220 aufgrund von Vibrationen oder anderen mechanischen Einflüssen bewegt werden könnte.

Fig. 2B zeigt das erste Verschlusselement 210 der Vorrichtung 200 in einer Sicht von unten auf die dem Behälter zugewandte Unterseite 211. Auf der Unterseite 211 befindet sich für jede Öffnung 213 ein die Öffnung 213 umlaufender, erhabener Rand 214. Der umlaufende, erhabene Rand 214 besteht, wie bereits in Fig. 1B und 1C erläutert, aus einem ersten Längenabschnitt 215 mit einer scharfkantigen Oberfläche und einem zweiten Längenabschnitt 216 mit einer stumpfen Oberfläche. Die der Öffnung 213 abgewandte Außenseite des zweiten Längenabschnitts 216 des erhabenen Randes 214 verläuft bogenförmig, um den Folienausschnitt, der in diesem Bereich mit der Folie verbunden bleibt, bogenförmig zu verformen.

Fig. 2C zeigt das zweite Verschlusselement 220 der Vorrichtung 200 in einer Sicht von schräg unten auf die dem ersten Verschlusselement zugewandte Unterseite 221. Das zweite Verschlusselement 220 weist ein Steckloch 231 auf, zur Aufnahme des Stiftes 232 des ersten Verschlusselements 210 (siehe Fig. 2A) und Herstellung der beweglichen Verbindung mit dem ersten Verschlusselement 210. Auf der Unterseite 221 des zweiten Verschlusselements 220 ist für jede der drei Öffnungen 213 des ersten Verschlusselements 210 (siehe Fig. 2A) jeweils eine Dichtlippe 223, also ein umlaufender, geringfügig erhabener Rand, vorgesehen, die so ausgestaltet sind, dass sie in der Geschlossenstellung die Öffnungen 213 dichtend umlaufen. Dies bewirkt eine Verbesserung des Verdunstungsschutzes und eine Erhöhung der Lichtdichtheit der Verschlussvorrichtung in der Geschlossenstellung. Das hier gezeigte zweite Verschlusselement 220 weist ferner Flügelkanten 233 auf, die in die Führungsbrücken 219 des ersten Verschlusselements 210 (siehe Fig. 2A) greifen können, wodurch der Bewegungsradius des zweiten Verschlusselements 220 festgelegt wird. Weiterhin weist das hier gezeigte zweite Verschlusselement 220 auf der Oberseite 222 einen Mitnehmer 234 auf, auf den eine Horizontalkraft einwirken kann, wodurch das zweite Verschlusselement 220 von der Geschlossenstellung in die Offenstellung und umgekehrt beweglich ist. Das hier gezeigte Beispiel eines zweiten Verschlusselements 220 weist ferner eine Öffnung 241 (D) aufweist, die sich in der Geschlossenstellung zwischen den Öffnungen 213 A' und 213 B' befindet und die sich in der Offenstellung über der Öffnung 213 B' des ersten Verschlusselements befindet (siehe auch Fig. 2E und 2F).

Fig. 2D zeigt das zweite Verschlusselement 220 der Vorrichtung 200 in einer Sicht von schräg oben auf die dem ersten Verschlusselement abgewandte Oberseite 222. Das zweite Verschlusselement 220 weist ein Steckloch 231 auf, zur Aufnahme des Stiftes 232 des ersten Verschlusselements 210 und Herstellung der beweglichen Verbindung mit dem ersten Verschlusselement 210. Das hier gezeigte zweite Verschlusselement 220 weist ferner speziell ausgestaltete Flügelkanten 233 auf, die in die Führungsbrücken 219 des ersten Verschlusselements 210 greifen können, wodurch der Bewegungsradius des zweiten Verschlusselements 220 festgelegt wird. An verschiedenen Stellen weisen die Flügelkanten 233 Aussparungen auf. Die kreisbogenförmige Aussparung 242 ist erforderlich, damit in der Offenstellung die Öffnung 213 C' des ersten Verschlusselements 210 nicht teilweise von der Flügelkante bedeckt und damit der Zugang zum Behälterinneren behindert ist (siehe Fig. 2F). Die keilförmige Aussparung 243 ist erforderlich, damit das Verschlusselement 220 mit dem Verschlusselement 210 verbunden oder von diesem getrennt werden kann, ohne dass sich die Führungsbrücken 219 und Flügelkanten 233 beim Zusammensetzen gegenseitig behindern. Dazu muss das zweite Verschlusselement 220 in eine Stellung bewegt werden, die zwischen Offen- und Geschlossenstellung liegt. Weiterhin weist das hier gezeigte zweite Verschlusselement 220 auf der Oberseite 222 einen Mitnehmer 234 auf, auf den eine Horizontalkraft einwirken kann, wodurch das zweite Verschlusselement 220 von der Geschlossenstellung in die Offenstellung und umgekehrt beweglich ist. Das hier gezeigte Beispiel eines zweiten Verschlusselements 220 weist ferner eine Öffnung 241 (D) aufweist, die sich in der Geschlossenstellung zwischen den Öffnungen 213 (A') und 213 (B') befindet und die sich in der Offenstellung über der Öffnung 213 (B') des ersten Verschlusselements befindet (siehe auch Fig. 2E und 2F).

Fig. 2E zeigt eine Aufsicht von oben auf eine Vorrichtung 200 bestehend aus einem ersten Verschlusselement 210 und einem zweiten Verschlusselement 220 in der Geschlossenstellung. In dieser Stellung ist das Behälterinnere aller drei Kammern vor Verdunstung, Kontamination und Lichteinfall geschützt.

Fig. 2F zeigt eine Aufsicht von oben auf eine Vorrichtung 200 bestehend aus einem ersten Verschlusselement 210 und einem zweiten Verschlusselement 220 in der Offenstellung. In dieser Stellung befindet sich die Öffnung 241 (D) des zweiten Verschlusselements 220 über der Öffnung 213 (B') des ersten Verschlusselements. In dieser Stellung ist der Zugriff auf alle drei Kammern des Behälters möglich.

### Figur 3

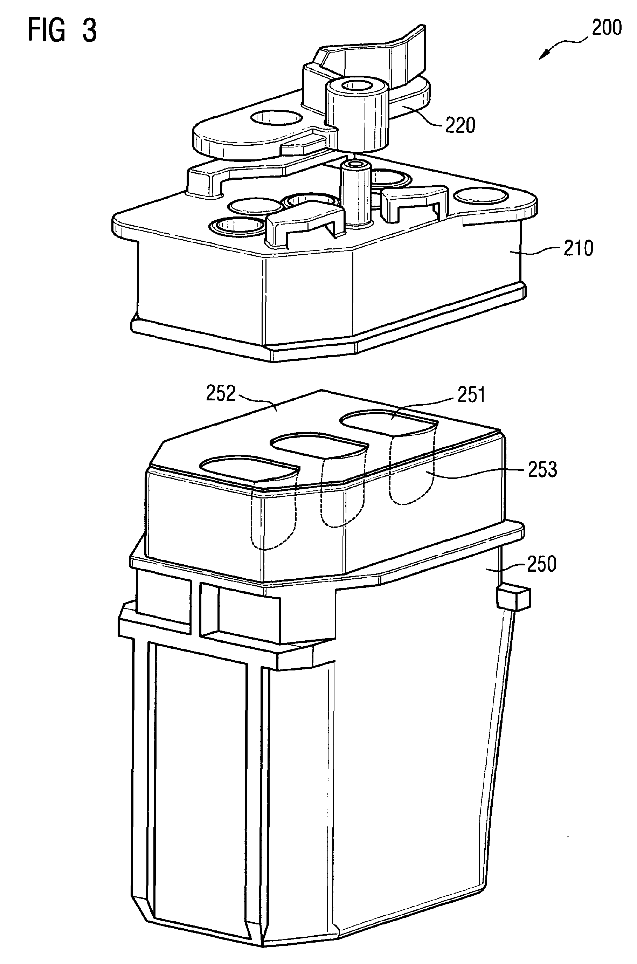

Fig. 3 zeigt eine seitliche Ansicht einer explodierten Anordnung einer erfindungsgemäßen Verschlussvorrichtung 200 bestehend aus einem ersten Verschlusselement 210 und einem zweiten Verschlusselement 220 an einem dreikammrigen Reagenzbehälter 250. Die beiden senkrechten Trennwände, die das Behälterinnere in drei separate Kammern aufteilen, sind nicht dargestellt. Auf der Oberseite des Reagenzbehälters 251 ist eine Folie 252 angebracht, die alle drei Kammern des Behälters bedeckt. Durch die Anordnung der Verschlussvorrichtung 200 auf dem mit der Folie 252 versiegelten Reagenzbehälter 250 wurde pro Behälterkammer eine Öffnung 251 in die Folie geschnitten. Die Folienausschnitte 253 ragen in das Behälterinnere. Ihre leicht konkave Verformung verleiht eine ausreichende Steifigkeit, wodurch ein Flattern der Ausschnitte, welches den Zugriff in die Behälteröffnung behindern könnte, vermieden wird.

### BEZUGSZEICHENLISTE

- 100, 200: Verschlussvorrichtung
- 110, 210: erstes Verschlusselement
- 111, 211: Unterseite des ersten Verschlusselements
- 112, 212: Oberseite des ersten Verschlusselements
- 113, 213: Öffnung des ersten Verschlusselements
- 114, 214: umlaufender, erhabener Rand
- 115, 215: erster Längenabschnitt
- 115' , 115" , 115"': mit scharfkantiger Oberfläche Teilabschnitte
- 116, 216: des ersten Längenabschnitts zweiter Längenabschnitt
- 117: mit stumpfer Oberfläche Schneide
- 118: zackenförmige Struktur
- 119, 219: Führungsbrücke
- 120, 220: zweites Verschlusselement
- 121, 221: Unterseite des zweiten Verschlusselements
- 122, 222: Oberseite des zweiten Verschlusselements
- 123, 223: Dichtlippe
- 130, 230: Außenwand
- 131, 231: Steckloch
- 132, 232: Stift
- 133, 233: Flügelkante
- 134, 234: Mitnehmer
- 240: Erhebung
- 241: Öffnung des zweiten Verschlusselements
- 242, 243: Aussparung
- 250: Reagenzbehälter
- 251: Öffnung des Reagenzbehälters
- 252: Folie
- 253: Folienausschnitte

## Patentansprüche

1. Vorrichtung (100) zum lichtdichten Verschluss eines Behälters mit einer Öffnung, besagte Vorrichtung aufweisend
a) ein erstes Verschlusselement (110) mit einer dem Behälter zugewandten Unterseite (111) und einer dem Behälter abgewandten Oberseite (112) und mit mindestens einer Öffnung (113), das so ausgeformt ist, dass es formschlüssig so am Behälter anbringbar ist, dass sich die Öffnung (113) des Verschlusselements über der Öffnung des Behälters befindet, und
b) ein zweites Verschlusselement (120) mit einer dem ersten Verschlusselement zugewandten Unterseite (121) und einer dem ersten Verschlusselement abgewandten Oberseite (122), das mit dem ersten Verschlusselement (110) beweglich verbindbar ist und das in einer Geschlossenstellung die mindestens eine Öffnung (113) des ersten Verschlusselements bedeckt und in einer Offenstellung die mindestens eine Öffnung (113) des ersten Verschlusselements (110) nicht bedeckt,
wobei auf der Unterseite (111) des ersten Verschlusselements (110) ein die mindestens eine Öffnung (113) umlaufender, erhabener Rand (114) vorgesehen ist, der einen ersten Längenabschnitt (115) mit einer scharfkantigen Oberfläche und einen zweiten Längenabschnitt (116) mit einer stumpfen Oberfläche aufweist
**dadurch gekennzeichnet,**
**dass** der erste Längenabschnitt (115) des erhabenen Randes einen ersten, einen zweiten und einen dritten Teilabschnitt (115', 115" , 115" ') aufweist, wobei der erste und der dritte Teilabschnitt (115', 115"') jeweils geradlinig verlaufen und wobei der zweite Teilabschnitt (115"), der den ersten und den dritten Teilabschnitt verbindet, bogenförmig verläuft und wobei auf der Oberfläche des ersten und/oder dritten Teilabschnitts (115', 115"') eine Schneide (117) über die Gesamtlänge des Teilabschnitts verläuft und wobei der zweite Teilabschnitt (115") zackenförmige Strukturen (118) aufweist.

2. Vorrichtung nach Anspruch 1, wobei zumindest die der Öffnung (113) abgewandte Außenseite des zweiten Längenabschnitts (116) des erhabenen Randes (114) bogenförmig verläuft.

3. Vorrichtung nach einem der vorhergehenden Ansprüche, wobei der erste Längenabschnitt (115) des erhabenen Randes (114) den zweiten Längenabschnitt (116) des erhabenen Randes in Bezug auf dessen Höhe zumindest teilweise überragt.

4. Vorrichtung nach einem der vorhergehenden Ansprüche, wobei der erste Längenabschnitt (115) des erhabenen Randes (114) in einer Ebene liegt, die relativ zur Unterseite (111) des ersten Verschlusselements (110) geneigt ist.

5. Vorrichtung nach Anspruch 4, wobei die Ebene einen Neigungswinkel von 1 bis 45° aufweist.

6. Vorrichtung (200) zum lichtdichten Verschluss eines mehrkammrigen Behälters mit mindestens zwei Öffnungen, besagte Vorrichtung aufweisend
a) ein erstes Verschlusselement (210) mit einer dem Behälter zugewandten Unterseite (211) und einer dem Behälter abgewandten Oberseite (212) und mit mindestens zwei Öffnungen (213), das so ausgeformt ist, dass es formschlüssig so am Behälter anbringbar ist, dass sich die Öffnungen (213) des Verschlusselements über den Öffnungen des Behälters befinden, und
b) ein zweites Verschlusselement (220) mit einer dem ersten Verschlusselement zugewandten Unterseite (221) und einer dem ersten Verschlusselement abgewandten Oberseite (222), das mit dem ersten Verschlusselement (210) beweglich verbindbar ist und das in einer Geschlossenstellung die Öffnungen (213) des ersten Verschlusselements bedeckt und in einer Offenstellung die Öffnungen (213) des ersten Verschlusselements (210) nicht bedeckt,
wobei auf der Unterseite (211) des ersten Verschlusselements (210) für jede Öffnung (213) jeweils ein die Öffnung umlaufender, erhabener Rand (214) vorgesehen ist, der einen ersten Längenabschnitt (215) mit einer scharfkantigen Oberfläche und einen zweiten Längenabschnitt (216) mit einer stumpfen Oberfläche aufweist
**dadurch gekennzeichnet,**
**dass** der erste Längenabschnitt (115) eines jeden erhabenen Randes einen ersten, einen zweiten und einen dritten Teilabschnitt (115', 115'', 115''') aufweist, wobei der erste und der dritte Teilabschnitt (115', 115"') jeweils geradlinig verlaufen und wobei der zweite Teilabschnitt (115"), der den ersten und den dritten Teilabschnitt verbindet, bogenförmig verläuft und wobei auf der Oberfläche des ersten und/oder dritten Teilabschnitts (115', 115"') eine Schneide (117) über die Gesamtlänge des Teilabschnitts verläuft und wobei der zweite Teilabschnitt (115") zackenförmige Strukturen (118) aufweist.

7. Vorrichtung gemäß Anspruch 6 zum lichtdichten Verschluss eines dreikammrigen Behälters mit drei Öffnungen A, B, C, die linear angeordnet sind, wobei das erste Verschlusselement (210) drei Öffnungen A', B', C' (213) aufweist, die linear angeordnet sind, und wobei das zweite Verschlusselement (220) eine Öffnung D (241) aufweist, die sich in der Geschlossenstellung zwischen den Öffnungen A' und B' (213) befindet und die sich in der Offenstellung über der Öffnung B' (213) des ersten Verschlusselements (210) befindet.

8. Vorrichtung gemäß einem der vorhergehenden Ansprüche, wobei das zweite Verschlusselement (120, 220) auf der Oberseite einen Mitnehmer (134, 234) aufweist, auf den eine Horizontalkraft einwirken kann, wodurch das zweite Verschlusselement (120, 220) von der Geschlossenstellung in die Offenstellung und umgekehrt beweglich ist.

9. Vorrichtung gemäß einem der vorhergehenden Ansprüche, wobei auf der dem Behälter abgewandten Oberseite (112, 212) des ersten Verschlusselements (110, 210) Führungsbrücken (119, 219) zur Führung des zweiten Verschlusselements (120, 220) vorgesehen sind.

10. Vorrichtung gemäß Anspruch 9, wobei das zweite Verschlusselement (120, 220) Flügelkanten (133, 233) aufweist, die so mit den Führungsbrücken (119, 219) des ersten Verschlusselements (110, 210) zusammenwirken können, dass in der Geschlossenstellung und in der Offenstellung ein erhöhter Preßdruck auf das zweite Verschlusselement wirkt.

11. Vorrichtung gemäß einem der vorhergehenden Ansprüche, wobei auf der Unterseite (121, 221) des zweiten Verschlusselements (120, 220) für jede Öffnung (113, 213) des ersten Verschlusselements jeweils eine Dichtlippe vorgesehen (123, 223) ist, die so ausgestaltet ist, dass sie in der Geschlossenstellung die Öffnung (113, 213) dichtend umläuft.

12. Vorrichtung gemäß Anspruch 11, wobei auf der Oberseite (112, 212) des ersten Verschlusselements (110, 210) für mindestens eine Dichtlippe (123, 223), die auf der Unterseite (121, 221) des zweiten Verschlusselements (120, 220) vorhanden ist, eine Erhebung (240) vorgesehen ist, die so angeordnet ist, dass sie in der Offenstellung von der Dichtlippe passgenau umlaufen wird.

13. Testkit für einen diagnostischen Test, das einen ein - oder mehrkammrigen Reagenzbehälter enthält, dessen Öffnungen mit einer Folie verschlossen sind, **gekennzeichnet dadurch, dass** das Testkit ferner eine Verschlussvorrichtung (100, 200) gemäß einem der vorhergehenden Ansprüche enthält.

## Claims

1. Device (100) for the light-tight closure of a container with one opening, said device having
a) a first closure element (110) with a bottom surface (111) facing the container and a top surface (112) remote from the container and with at least one opening (113), said closure element being shaped such that it is mountable in a form-fitting manner on the container such that the opening (113) of the closure element is situated above the opening of the container, and
b) a second closure element (120) with a bottom surface (121) facing the first closure element and a top surface (122) remote from the first closure element, said second closure element being movably connectable to the first closure element (110) and, in a closed position, covering the at least one opening (113) of the first closure element and, in an open position, not covering the at least one opening (113) of the first closure element (110),
wherein a raised edge (114), which encircles the at least one opening (113), is provided on the bottom surface (111) of the first closure element (110), said edge having a first longitudinal portion (115) with a sharp-edged surface and a second longitudinal portion (116) with a blunt surface,
**characterized in that**
the first longitudinal portion (115) of the raised edge has a first, a second and a third part portion (115', 115" , 115"'), wherein the first and the third part portion (115', 115"') each extend in a straight line and wherein the second part portion (115"), which connects the first and the third part portion, extends in a curved manner and wherein, on the surface of the first and/or of the third part portion (115', 115"'), a cutting edge (117) extends over the entire length of the part portion and wherein the second part portion (115") has tooth-shaped structures (118).

2. Device according to Claim 1, wherein at least the outer surface of the second longitudinal portion (116) of the raised edge (114) remote from the opening (113) extends in a curved manner.

3. Device according to one of the preceding claims, wherein the first longitudinal portion (115) of the raised edge (114) projects, at least in part, beyond the second longitudinal portion (116) of the raised edge with reference to the height thereof.

4. Device according to one of the preceding claims, wherein the first longitudinal portion (115) of the raised edge (114) lies in one plane, which is inclined in relation to the bottom surface (111) of the first closure element (110).

5. Device according to Claim 4, wherein the plane has an angle of inclination of between 1 and 45°.

6. Device (200) for the light-tight closure of a multi-chambered container with at least two openings, said device having
a) a first closure element (210) with a bottom surface (211) facing the container and a top surface (212) remote from the container and with at least two openings (213), said closure element being shaped such that it is mountable in a form-fitting manner on the container such that the openings (213) of the closure element are situated above the openings of the container, and
b) a second closure element (220) with a bottom surface (221) facing the first closure element and a top surface (222) remote from the first closure element, said second closure element being movably connectable to the first closure element (210) and, in a closed position, covering the openings (213) of the first closure element and, in an open position, not covering the openings (213) of the first closure element (210),
wherein a raised edge (214), which encircles the opening (113), is provided on the bottom surface (211) of the first closure element (210) for each opening (213), said edge having a first longitudinal portion (215) with a sharp-edged surface and a second longitudinal portion (216) with a blunt surface,
**characterized in that**
the first longitudinal portion (115) of each raised edge has a first, a second and a third part portion (115', 115" , 115"'), wherein the first and the third part portion (115', 115"') each extend in a straight line and wherein the second part portion (115"), which connects the first and the third part portion, extends in a curved manner and wherein, on the surface of the first and/or of the third part portion (115', 115"'), a cutting edge (117) extends over the entire length of the part portion and wherein the second part portion (115") has tooth-shaped structures (118).

7. Device according to Claim 6 for the light-tight closure of a three-chambered container with three openings A, B, C which are arranged in a linear manner, wherein the first closure element (210) has three openings A', B', C' (213) which are arranged in a linear manner, and wherein the second closure element (220) has an opening D (241) which, in the closed position, is situated between the openings A' and B' (213) and, in the open position, is situated above the opening B' (213) of the first closure element (210).

8. Device according to one of the preceding claims, wherein the second closure element (120, 220) has an entrainment means (134, 234) on the top surface and a horizontal force is able to act on said entrainment means, as a result of which the second closure element (120, 220) is movable from the closed position into the open position and vice versa.

9. Device according to one of the preceding claims, wherein guide bridges (119, 219) for guiding the second closure element (120, 220) are provided on the top surface (112, 212) of the first closure element (110, 210) remote from the container.

10. Device according to Claim 9, wherein the second closure element (120, 220) has winged edges (133, 233) which can interact in such a manner with the guide bridges (119, 219) of the first closure element (110, 210) that in the closed position and in the open position an increased pressing pressure acts on the second closure element.

11. Device according to one of the preceding claims, wherein, in each case, a sealing lip (123, 223) is provided on the bottom surface (121, 221) of the second closure element (120, 220) for each opening (113, 213), said sealing lip being developed such that, in the closed position, it encircles the opening (113, 213) in a sealing manner.

12. Device according to Claim 11, wherein an elevation (240) is provided on the top surface (112, 212) of the first closure element (110, 210) for at least one sealing lip (123, 223), which is present on the bottom surface (121, 221) of the second closure element (120, 220), said elevation being arranged such that, in the open position, it is encircled with accuracy of fit by the sealing lip.

13. A test kit for a diagnostic test, said test kit including a single-chambered or multi-chambered reagent container, the openings of which are closed by a foil, **characterized in that** the test kit additionally includes a closure device (100, 200) according to one of the preceding claims.

## Revendications

1. Dispositif ( 100 ) de fermeture étanche à la lumière d'un récipient ayant une ouverture, ledit dispositif comprenant
a ) un premier élément ( 110 ) de fermeture ayant une face ( 111 ) inférieure tournée vers le récipient et une face ( 112 ) supérieure éloignée du récipient et ayant au moins une ouverture ( 113 ), qui est conformé de manière à pouvoir être mis à complémentarité de forme sur le récipient de manière à ce que l'ouverture ( 113 ) de l'élément de fermeture se trouve au dessus de l'ouverture du récipient, et
b) un deuxième élément ( 120 ) de fermeture ayant une face ( 121 ) inférieure tournée vers le premier élément de fermeture et une face ( 122 ) supérieure éloignée du premier élément de fermeture, qui peut être relié de manière amovible au premier élément ( 110 ) de fermeture et qui dans une position fermée, recouvre la au moins une ouverture ( 113 ) de premier élément de fermeture et, dans une position ouverte, ne recouvre pas la au moins une ouverture ( 113 ) du premier élément ( 110 ) de fermeture,
dans lequel il prévu, sur la face ( 111 ) inférieure du premier élément ( 110 ) de fermeture, un bord ( 114 ) en relief qui entoure la au moins une ouverture et qui a un premier segment ( 115 ) long ayant une surface à bord vif et un deuxième segment ( 116 ) long ayant une surface épointée, **caractérisé**
**en ce que** le premier segment ( 115 ) long du bord en relief a un premier et un deuxième et un troisième sous-segments ( 115', 115" , 115"') le premier et le troisième sous-segments ( 115', 115"') s'étendant respectivement en ligne droite et le deuxième sous-segment ( 115" ) qui relie le premier et le troisième sous-segments s'étendant en forme d'arc et sur la surface du premier et/ou du troisième sous-segment ( 115', 115" ), une lame ( 117 ) s'étend sur toute la longueur du sous-segment et le deuxième sous-segment ( 115" ) a des structures en forme de pointe.

2. Dispositif suivant la revendication 1, dans lequel au moins le côté extérieur, éloigné de l'ouverture ( 113 ), du deuxième segment ( 116 ) long du bord ( 114 ) en relief s'étend en forme d'arc.

3. Dispositif suivant l'une des revendication précédentes, dans lequel le premier tronçon ( 115 ) long du bord ( 114 ) en relief dépasse au moins en partie en ce qui concerne son niveau du deuxième segment ( 116 ) long du bord en relief.

4. Dispositif suivant l'une des revendication précédentes, dans lequel le premier segment ( 115 ) long du bord ( 114 ) en relief est dans un plan qui est incliné par rapport à la face ( 111 ) inférieure du premier élément ( 110 ) de fermeture.

5. Dispositif suivant la revendication 4, dans lequel le plan a un angle d'inclinaison de 1 à 45°.

6. Dispositif ( 200 ) de fermeture d'une manière étanche à la lumière d'un récipient à plusieurs chambres et ayant au moins deux ouvertures, ledit dispositif comprenant
a ) un premier élément ( 210 ) de fermeture ayant une face ( 211 ) inférieure tournée vers le récipient et une face ( 212 ) supérieure éloignée du récipient et ayant au moins deux ouvertures ( 213 ), qui est conformé de manière à pouvoir être mis à complémentarité de forme sur le récipient de manière à ce que les ouvertures ( 213 ) de l'élément de fermeture se trouvent au-dessus des ouvertures du récipient, et
b ) un deuxième élément ( 220 ) de fermeture ayant une face ( 221 ) inférieure tournée vers le premier élément de fermeture et une face ( 222 ) supérieure éloignée du premier élément de fermeture, qui peut être relié de manière amovible au premier élément ( 210 ) de fermeture et qui dans une position fermée recouvre les ouvertures ( 213 ) du premier élément de fermeture et dans une position ouverte ne recouvre pas les ouvertures ( 213 ) du premier élément ( 210 ) de fermeture,
dans lequel il est prévu sur la face ( 211 ) inférieure du premier élément ( 210 ) de fermeture pour chaque ouverture ( 213 ) respectivement un bord ( 214 ) en relief, qui entoure l'ouverture et qui a un premier segment ( 215 ) long ayant une surface à bord vif et un deuxième segment ( 216 ) long ayant une surface épointée,
**caractérisé**
**en ce que** le premier segment ( 115 ) long de chaque bord en relief a un premier et un deuxième et un troisième sous-segments ( 115', 115" , 115"') le premier et le troisième sous-segments ( 115', 115"') s'étendant respectivement en ligne droite et le deuxième sous-segment ( 115" ) qui relie le premier et le troisième sous-segments s'étendant en forme d'arc et sur la surface du premier et/ou du troisième sous-segment ( 115', 115"'), une lame ( 117 ) s'étend sur toute la longueur du sous-segment et le deuxième sous-segment ( 115" ) a des structures en forme de pointe.

7. Dispositif suivant la revendication 6 pour la fermeture d'une manière étanche à la lumière d'un récipient à trois chambres ayant trois ouvertures A, B, C, qui sont disposés de manière linéaire, le premier élément ( 210 ) de fermeture ayant trois ouvertures A', B', C' ( 213 ) qui sont disposées de manière linéaire et dans lequel le deuxième élément ( 220 ) de fermeture a une ouverture D( 241 ) qui se trouve, dans la position fermée, entre les ouvertures A' et B' ( 213 ) et qui se trouve dans la position ouverte au dessus de l'ouverture B' ( 213 ) du premier élément ( 210 ) de fermeture.

8. Dispositif suivant l'une des revendications précédentes, dans lequel le deuxième élément ( 120, 220 ) de fermeture a sur la face supérieure un entraîneur ( 134, 234 ) sur lequel une force horizontale peut agir de sorte que le deuxième élément ( 120, 220 ) de fermeture est mobile de la position fermée à la position ouverte et inversement.

9. Dispositif suivant l'une des revendications précédentes, dans lequel il est prévu sur la face ( 112, 212 ) supérieure, éloignée du récipient, du premier élément ( 110, 210 ) de fermeture, des pontets ( 119, 219 ) de guidage pour le guidage du deuxième élément ( 120, 220 ) de fermeture.

10. Dispositif suivant la revendication 9, dans lequel l'élément ( 120, 220 ) de fermeture a des bords ( 133, 233 ) d'aile, qui peuvent coopérer avec les pontets ( 119, 219 ) de guidage du premier élément ( 110, 210 ) de fermeture de manière à ce que, dans la position fermée et dans la position ouverte, une pression accrue agisse sur le deuxième élément de fermeture.

11. Dispositif suivant l'une des revendications précédentes, dans lequel il est prévu sur la face ( 121, 221 ) inférieure du deuxième élément ( 120, 220 ) de fermeture, pour chaque ouverture ( 113, 213 ) du premier élément de fermeture, respectivement une lèvre d'étanchéité ( 123, 223 ) qui, est conformée de manière à entourer avec étanchéité l'ouverture ( 113, 213 ) dans la position fermée.

12. Dispositif suivant la revendication 11, dans lequel il est prévu sur la face ( 112, 212 ) supérieure du premier élément ( 110, 210 ) de fermeture, pour au moins une lèvre ( 123, 223 ) d'étanchéité qui est présente sur la face ( 121, 221 ) inférieure du deuxième élément ( 120, 220 ) de fermeture, une surélévation ( 240 ) qui est disposée de manière à être juste entourée par la lèvre d'étanchéité dans la position d'ouverture.

13. Trousse de test pour un test de diagnostic, qui contient un récipient à réactif à une chambre ou à plusieurs chambres et dont les ouvertures sont fermées par une feuille, **caractérisée en ce que** la trousse de test comporte en outre un dispositif ( 100, 200 ) de fermeture suivant l'une des revendications précédentes.
